# EUROPEAN PATENT SPECIFICATION

(11) **EP 3 153 748 B1**
(45) Date of publication and mention of the grant of the patent: **29.08.2018**
(21) Application number: 16174934.6
(22) Date of filing: 17.06.2016
(51) Int. Cl.: F16K 5/04, F16K 11/085

(54) **FLOW CHANNEL SWITCHING VALVE**
STRÖMUNGSKANALUMSCHALTVORRICHTUNG
SOUPAPE DE COMMUTATION DE CANAL D'ÉCOULEMENT

(30) Priority: 24.09.2015 JP 2015186789
(43) Date of publication of application: 12.04.2017
(73) Proprietor: Fujikoki Corporation, Tokyo 158-0082 (JP)
(72) Inventor: MATSUMOTO, Takayuki, Setagaya-ku, Tokyo 158-0082 (JP); MOCHIZUKI, Kenichi, Setagaya-ku, Tokyo 158-0082 (JP); HARA, Seiichi, Setagaya-ku, Tokyo 158-0082 (JP); KONDO, Daisuke, Setagaya-ku, Tokyo 158-0082 (JP)
(74) Representative: Schweiger, Martin

(56) References cited:
- WO-A1-2015/091403
- CH-A5- 667 142
- JP-A- H09 210 226
- JP-A- 2004 011 813
- JP-A- 2006 275 248
- JP-A- 2015 034 560
- US-A1- 2015 184 761

## Description

### BACKGROUND OF THE INVENTION

### Field of the Invention

The present invention is involved with a flow channel switching valve, and relates to a rotary type flow channel switching valve which switches a flow channel by rotationally sliding a valve element in an inner side of a seal member, for example, serving as a valve seat which suppresses leakage of a fluid between a valve chamber and each of outflow ports.

### Description of the Conventional Art

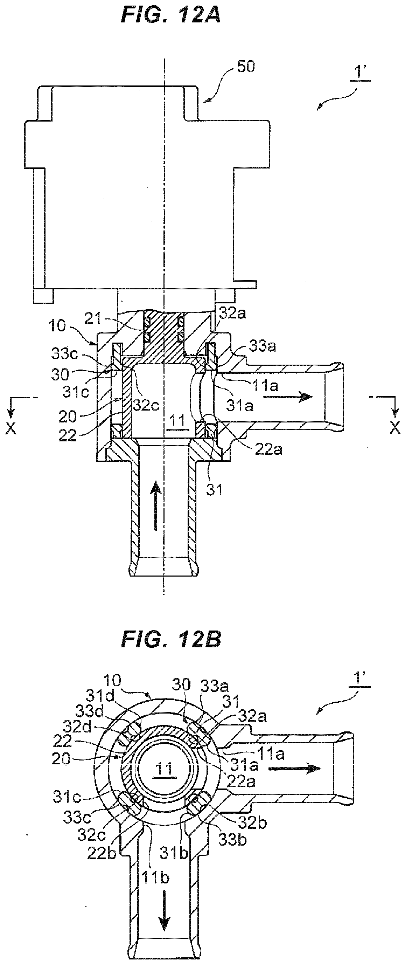

This kind of conventional example will be shown in Fig. 12. A flow channel switching valve 1' according to the illustrated conventional example is used, for example, as a rotary type switching valve (a rotary valve) which switches a flow channel of a fluid flowing within an engine room of a motor vehicle, is provided with a rotation drive unit 50, a valve body 10 having a valve chamber 11 and outflow ports 11a and 11b which communicate with the valve chamber 11, a seal member 30 which is arranged within the valve chamber 11 of the valve body 10, the seal member 30 having a cylindrical body 31 in which a plurality of openings 31a to 31d are formed in a peripheral direction, and inside ribs 32a to 32d and outside ribs 33a to 33d which are provided so as to protrude toward an inner side and an outer side from an inner peripheral surface and an outer peripheral surface of the cylindrical body 31 along peripheries of the openings 31a to 31d, and a valve element 20 constructed by a valve shaft 21 which is coupled to the rotation drive unit 50 and a valve element portion 22 which is accommodated in a region surrounded by the seal member 30, and is structured such that the valve element portion 22 rotationally slides around the inner peripheral sides of the inside ribs 32a to 32d of the seal member 30 so as to open and close or switch the outflow ports 11a and 11b of the valve body 10 by rotating the valve element portion 22 within the valve chamber 11 via the valve shaft 21 by the rotation drive unit 50 (for example, patent document 1).

### PRIOR ART DOCUMENT

### Patent Document

Patent Document 1: Japanese Unexamined Patent Publication No. 2015-034560

US20150184761A1 discloses a rotary valve seal member that is held in sliding contact with a valve element that rotates, turns, or slides within a valve housing of a rotary valve and that can provide a secured seal as the valve element operates.

JP2004011813 provides a cylinder valve that can maintain water-tightness for a long period of time.

JPH09210226 provides an opening/closing valve with a simplified structure and with improved air-tightness.

CH667142 provides a valve, which has protection against corrosive and abrasive materials and which is simple to repair.

WO2015091403 shows a movable barrel for a fluid circuit valve, particularly for a motor vehicle.

JP2006275248 discloses a valve that can discharge water and can stop water from discharging according to its usage mode.

### SUMMARY OF THE INVENTION

### Problem to be Solved by the Invention

In the meanwhile, in the flow channel switching valve 1' of the above conventional example, (the inside rib of) the seal member passes through a communication port formed in the valve element portion of the valve element when the flow channel is switched by rotating the valve element, however, (the inside rib of) the seal member partly gets down (falls away) into the communication port due to its elasticity at the passing time, and a great torque is required for (the inside rib of) the seal member getting down to run on the communication port. Therefore, there has been a problem that the rotation drive unit is enlarged in its size.

The present invention is made by taking the problem mentioned above into consideration, and an object of the present invention is to provide a flow channel switching valve which can prevent a seal member from getting down into a communication port, or can effectively reduce a torque required for switching a flow channel by assisting the seal member to slide on the communication port, with a simple structure.

In order to solve the problem mentioned above, a flow channel switching valve according to the present invention is provided with a valve body in which a valve chamber is formed in its inner portion and which has a cylindrical barrel portion provided with a plurality of outflow ports in its outer peripheral portion, a valve element in which a plurality of communication ports are formed in a peripheral direction and which has a cylindrical valve element portion occluded its upper opening and rotatably arranged within the valve chamber, a rotation drive unit for rotating the valve element, and a seal member which is interposed between the cylindrical barrel portion of the valve body and the cylindrical valve element portion of the valve element so as to suppress leakage of a fluid between the valve chamber and each of the outflow ports, and is structured such that the cylindrical valve element portion rotationally slides around an inner peripheral side of the seal member so as to open and close or switch the outflow port of the valve body, by rotating the cylindrical valve element portion of the valve element within the valve chamber by the rotation drive unit, wherein a bridging portion connecting two end portions in the peripheral direction of the communication port is provided in each of the communication ports in the cylindrical valve element portion of the valve element.

According to a preferable aspect, an outer side in the cylindrical valve element portion of the valve element is formed by a raw material having a lower sliding resistance against the seal member in comparison with an inner side.

Further, a flow channel switching valve according to the present invention is provided with a valve body in which a valve chamber is formed in its inner portion and which has a cylindrical barrel portion provided with a plurality of outflow ports in its outer peripheral portion, a valve element in which a plurality of communication ports are formed in a peripheral direction and which has a cylindrical valve element portion occluded its upper opening and rotatably arranged within the valve chamber, a rotation drive unit for rotating the valve element, and a seal member which is interposed between the cylindrical barrel portion of the valve body and the cylindrical valve element portion of the valve element so as to suppress leakage of a fluid between the valve chamber and each of the outflow ports, and is structured such that the cylindrical valve element portion rotationally slides around an inner peripheral side of the seal member so as to open and close or switch the outflow port of the valve body, by rotating the cylindrical valve element portion of the valve element within the valve chamber by the rotation drive unit, wherein the cylindrical valve element portion is formed by an outer side of a cylindrical main body portion being coated with a cylindrical cover portion made of a raw material having a lower sliding resistance against the seal member in comparison with the cylindrical main body portion, and a bridging portion connecting two end portions in a peripheral direction of the communication port is provided in each of the communication ports in the cylindrical cover portion of the cylindrical valve element portion.

In a preferable aspect, an engagement mechanism integrally engaging the cylindrical main body portion with the cylindrical cover portion is provided between an outer periphery of the cylindrical main body portion and an inner periphery of the cylindrical cover portion.

According to the invention, a bridging portion connecting two end portions in the peripheral direction of the communication port is provided in each of the communication ports in the cylindrical main body portion of the cylindrical valve element portion.

In the other preferable aspect, the bridging portion is provided along an outer periphery of the cylindrical valve element portion or the cylindrical cover portion.

In a further preferable aspect, the bridging portion is provided at the upper and lower center portion of each of the communication ports.

In the other preferable aspect, a periphery of an outer peripheral side of each of the communication ports is formed to be rounded.

### Effect of the Invention

According to the present invention, the bridging portion connecting two end portions in the peripheral direction of the communication port is provided in each of the communication ports in the cylindrical valve element portion of the valve element which rotationally slides around the inner peripheral side of the seal member. As a result, it is possible to prevent the seal member from getting down into the communication port when the flow channel is switched by rotating the valve element, or it is possible to reduce the torque required for switching the flow channel by assisting the seal member to slide on the communication port.

Further, the cylindrical valve element portion of the valve element is formed, for example, by the outer side of the cylindrical main body portion being coated with the cylindrical cover portion made of the raw material having the lower sliding resistance against the seal member in comparison with the cylindrical main body portion, and the outer side in the cylindrical valve element portion of the valve element is formed by the raw material having the lower sliding resistance against the seal member in comparison with the inner side thereof. As a result, it is possible to reduce the torque required for switching the flow channel by making the sliding resistance against the seal member smaller.

### BRIEF EXPLANATION OF THE DRAWINGS

Figs. 1A and 1B are views showing a main structure of a first embodiment of a flow channel switching valve according to the present invention, in which Fig. 1A is a perspective view and Fig. 1B is a side elevational view;
Fig. 2 is a cross-sectional view as seen from an arrow A-A in Fig. 1B;
Fig. 3 is a cross-sectional view as seen from an arrow B-B in Fig. 1B;
Fig. 4 is a perspective view showing a valve element in Fig. 1;
Fig. 5A is a cross-sectional view as seen from an arrow U-U in Fig. 4 and is a view showing the valve element together with a seal member;
Fig. 5B is a cross-sectional view as seen from an arrow V-V in Fig. 4 and is a view showing the valve element together with the seal member;
Fig. 6 is a vertical cross-sectional view showing a main structure of a second embodiment of the flow channel switching valve according to the present invention and is a view along the arrow A-A in Fig. 1B;
Fig. 7 is a transverse cross-sectional view showing the main structure of the second embodiment of the flow channel switching valve according to the present invention and is a view along the arrow B-B in Fig. 1B;
Figs. 8A and 8B are perspective views showing a valve element in Fig. 6, in which Fig. 8A is a view showing an assembly completed state and Fig. 8B is a view showing an assembly midstream state;
Fig. 9 is a perspective view showing a cylindrical cover portion in Fig. 8;
Figs. 10A, 10B and 10C are views showing the other example of the valve element shown in Fig. 8, in which Fig. 10A is a perspective view showing an assembly completed state, Fig. 10B is a perspective view showing an assembly midstream state, and Fig. 10C is a bottom elevational view;
Figs. 11A, 11B and 11C are views showing further the other example of the valve element shown in Fig. 8, in which Fig. 11A is a perspective view showing an assembly completed state, Fig. 11B is a perspective view showing an assembly midstream state, and Fig. 11C is a bottom elevational view; and
Figs. 12A and 12B are views showing a conventional flow channel switching valve, in which Fig. 12A is a vertical cross-sectional view, and Fig. 12B is a cross-sectional view as seen from an arrow X-X.

### DETAILED DESCRIPTION OF PREFERRED EMBODIMENTS

A description will be given below of embodiments according to the present invention with reference to the accompanying drawings.

### First Embodiment

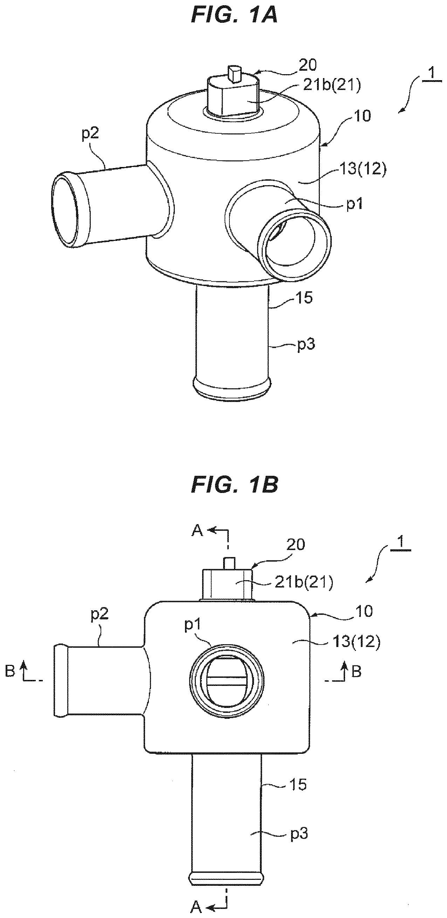

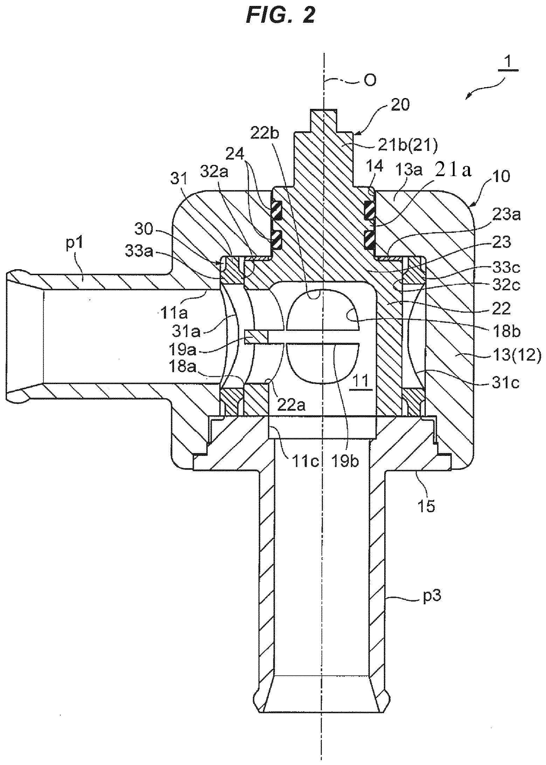

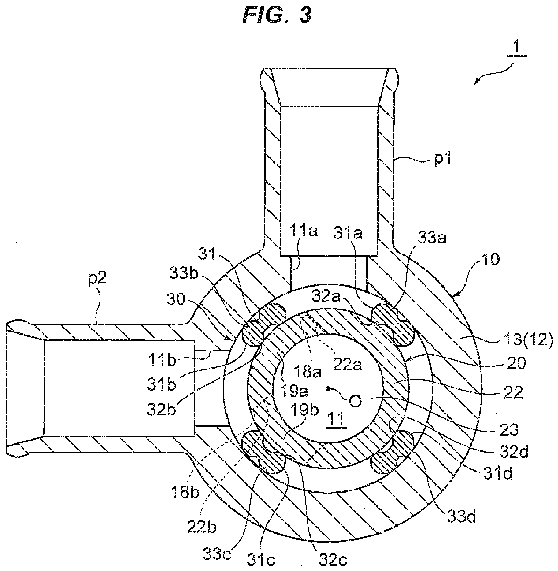

Figs. 1A and 1B are views showing a main structure of a first embodiment of a flow channel switching valve according to the present invention, in which Fig. 1A is a perspective view and Fig. 1B is a side elevational view. Further, Fig. 2 is a cross-sectional view as seen from an arrow A-A in Fig. 1B, and Fig. 3 is a cross-sectional view as seen from an arrow B-B in Fig. 1B. Fig. 3 shows a state in which a valve element is rotated at about 45 degrees in a counterclockwise direction as seen from the below in relation to Figs. 1 and 2. Further, in Figs. 1 to 3, a rotation drive unit constructed by a motor for rotating the valve element is omitted.

A flow channel switching valve 1 according to the illustrated embodiment is used, for example, as a three-way switching valve which switches a flow channel for a fluid flowing in an engine room of a motor vehicle to multiple directions, and is basically provided with a valve body 10 which has a valve chamber 11 and is made of a resin, a motor (a rotation drive unit) (not shown) which is arranged above the valve body 10, a seal member 30 which is arranged within the valve chamber 11 of the valve body 10 and serves as a valve seat, and a valve element 20 which is constructed by a valve shaft 21 coupled to an output shaft of the motor and a cylindrical valve element portion 22 accommodated in a region surrounded by the seal member 30 with a ceiling portion and is made of a resin.

The valve body 10 is constructed by a cylindrical base body 12 and a lower port member 15, and with cylindrical base body 12 there are formed two outflow ports 11a and 11b in its outer peripheral portion which are open to the valve chamber 11 at a predetermined angular interval (an angular interval of 90 degrees in the illustrated example) as well as being formed a valve chamber 11 in its inner portion, and has a cylindrical barrel portion 13 with a ceiling portion 13a. Outflow ports p1 and p2 constructed by joints are integrally formed in the cylindrical barrel portion 13 so as to be communicated with the respective outflow ports 11a and 11b. Further, a fitting insertion hole 14 to which the valve shaft 21 of the valve element 20 is inserted is formed in the ceiling portion 13a. A lower port member 15 having an inflow port p3 constructed by a joint is inward fitted and fixed to a lower opening of the cylindrical barrel portion 13 (the cylindrical base body 12) according to ultrasonic welding, press fitting or caulking. As a result, a vertical inlet opening 11c open to the valve chamber 11 is formed.

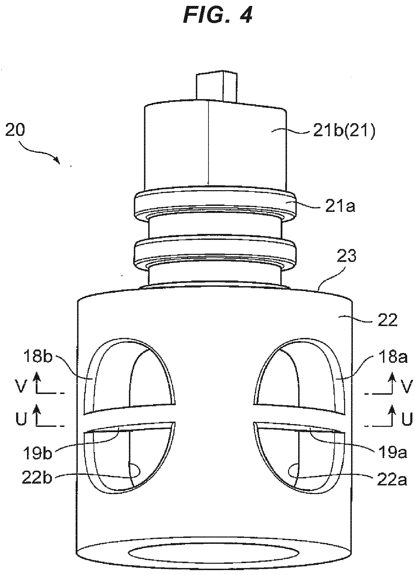

The valve element 20 is structured, as can be well understood by referring to Fig. 4 together with Figs. 1 to 3, such that two oval communication ports 22a and 22b are formed at a predetermined angular interval (an angular interval of 90 degrees in the illustrated example) in a peripheral direction, and an upper opening is occluded by the ceiling portion 23 of cylindrical valve element portion 22, and has a cylindrical valve element portion 22 which is arranged rotatably within the valve chamber 11 (in other words, the cylindrical barrel portion 13), and a valve shaft 21 which is provided on the ceiling portion 23 of the cylindrical valve element portion in a protruding manner.

Bridging portions 19a and 19b extending in a peripheral direction (a rotating direction) are integrally formed at the upper and lower center of each of the communication ports 22a and 22b formed in the cylindrical valve element portion 22 of the valve element 20 so as to be along an outer periphery of the cylindrical valve element portion 22. Further, the periphery of an outer peripheral side of each of the communication ports 22a and 22b is formed to be rounded (with rounded portions 18a and 18b).

On the other hand, the valve shaft 21 is constructed by an intermediate shaft portion 21a which is rotatably fitted and inserted to the fitting insertion hole 14 and has a smaller diameter than that of the cylindrical valve element portion 22, and an upper shaft portion 21b which is provided on the intermediate shaft portion 21a in a protruding manner, is coupled to an output shaft of the motor and is formed into an oval shape in a plan view, and O-rings 24 serving as a seal member are interposed in two stages between the intermediate shaft portion 21a and an inner peripheral surface of the fitting insertion hole 14.

Further, in the illustrated example, an annular seat member 23a made of PTFE for slipping is interposed between (an upper surface of) the ceiling portion 23 of the cylindrical valve element portion and (a lower surface of) the ceiling portion 13a of the cylindrical barrel portion 13 (in other words, an outer periphery of the valve shaft 21 in the upper surface of the ceiling portion 23 of the cylindrical valve element portion) so as to reduce a sliding resistance of the ceiling portion 23 of the cylindrical valve element portion against the valve body 10 at the flow channel switching time (the valve element 20 rotating time).

Further, the seal member 30 is made of an elastic raw material such as a rubber so as to be symmetrical vertically, and is basically constructed by a cylindrical body 31 in which four oval openings 31a to 31d are formed at predetermined angular intervals (angular intervals of 90 degrees in the illustrated example) in a peripheral direction, and inside ribs 32a to 32d and outside ribs 33a to 33d for sealing which are provided around the respective openings 31a to 31d of the cylindrical body 31 so as to protrude inward and outward. The cylindrical seal member 30 is interposed in a compressed state between the cylindrical barrel portion 13 of the valve body 10 and the cylindrical valve element portion 22 of the valve element 20 along the outer periphery of the valve chamber 11 so as to suppress leakage of the fluid between the valve chamber 11 and each of the outflow ports 11a and 11b, in detail, in such a manner that an upper end portion (of the cylindrical body 31) comes into contact with the ceiling portion 13a of the cylindrical barrel portion 13 in the valve body 10, a lower end portion (of the cylindrical body) 31 comes into contact with the lower port member 15 of the valve body 10, (inner peripheral sides of) the inside ribs 32a to 32d come into contact with the cylindrical valve element portion 22 of the valve element 20, and (outer peripheral sides of) the outside ribs 33a to 33d come into contact with an outer peripheral portion of the cylindrical barrel portion 13 in the valve body 10.

When the flow channel switching valve 1 mentioned above is assembled, the seal member 30 is inserted into the cylindrical barrel portion 13 of the cylindrical base body 12 from below in such a manner as to press fit while positioning the seal member 30 in relation to the valve body 10 so that the adjoining openings 31a and 31b among the respective openings 31a to 31d formed in (the cylindrical body 31 of) the seal member 30 are always communicated with the respective outflow ports 11a and 11b formed in (the cylindrical barrel portion 13 of) the valve body 10 before the lower port member 15 is inward fitted and fixed to the cylindrical barrel portion 13 of the cylindrical base body 12. Next, the annular seat member 23a is arranged on an upper surface of the ceiling portion 23 of the cylindrical valve element portion from a lower side thereof, and the valve element 20 in which the O-rings 24 are installed to the intermediate shaft portion 21a is inserted in such a manner as to be press fitted. As a result, the seat member 23a comes into contact with the ceiling portion 13a of the cylindrical barrel portion 13, and is inward inserted to an inner peripheral side of (the inside ribs 32a to 32d of) the seal member 30 slidably and rotatably while compressing the seal member 30 to such a degree that can secure a compression margin necessary for the seal with the seal member 30 in a state in which the cylindrical valve element portion 22 of the valve element 20 is supported from the periphery by the inside ribs 32a to 32d. Further, the lower port member 15 is inward fitted and fixed to the lower opening of the cylindrical barrel portion 13 in the cylindrical base body 12, and the motor is installed to the above of the cylindrical base body 12.

In the flow channel switching valve 1 having the structure mentioned above, the cylindrical valve element portion 22 of the valve element 20 is structured such as to rotate and slide along the inner peripheral side (of the inside ribs 32a to 32d) of the seal member 30 by rotating the valve element 20 by driving the motor, thereby opening and closing or switching the outflow ports 11a and 11b of the valve body 10. Specifically, the following four open and close modes can be selectively adopted as well as the inlet opening 11c formed in the valve body 10 always communicates with the valve chamber 11 (via the lower opening of the cylindrical valve element portion 22 in the valve element 20). The four open and close modes includes an open-open mode that the respective outflow ports 11a and 11b formed in the valve body 10 communicate with the valve chamber 11 (via the respective openings 31a and 31b of the seal member 30 and the respective communication ports 22a and 22b of the cylindrical valve element portion 22 in the valve element 20), a close-close mode that the outflow ports 11a and 11b are closed (by the cylindrical valve element portion 22 of the valve element 20), an open-close mode that the outflow port 11a communicates with the valve chamber 11 (via the opening 31a of the seal member 30 and the communication port 22b of the cylindrical valve element portion 22 in the valve element 20) and the outflow port 11b is closed (by the cylindrical valve element portion 22 of the valve element 20), and a close-open mode that the outflow port 11a is closed (by the cylindrical valve element portion 22 of the valve element 20) and the outflow port 11b communicates with the valve chamber 11 (via the opening 31b of the seal member 30 and the communication port 22a of the cylindrical valve element portion 22 in the valve element 20).

In the flow channel switching valve 1 according to the present embodiment, when the flow channel is switched as mentioned above by rotating the valve element 20 on the basis of the motor driving, the valve element 20 is rotated in a state in which the cylindrical valve element portion 22 slides with the inner peripheral sides of the inside ribs 32a to 32d of the seal member 30, and the inside ribs 32a to 32d of the seal member 30 pass through the communication ports 22a and 22b formed in the cylindrical valve element portion 22 in the middle of the flow channel switching.

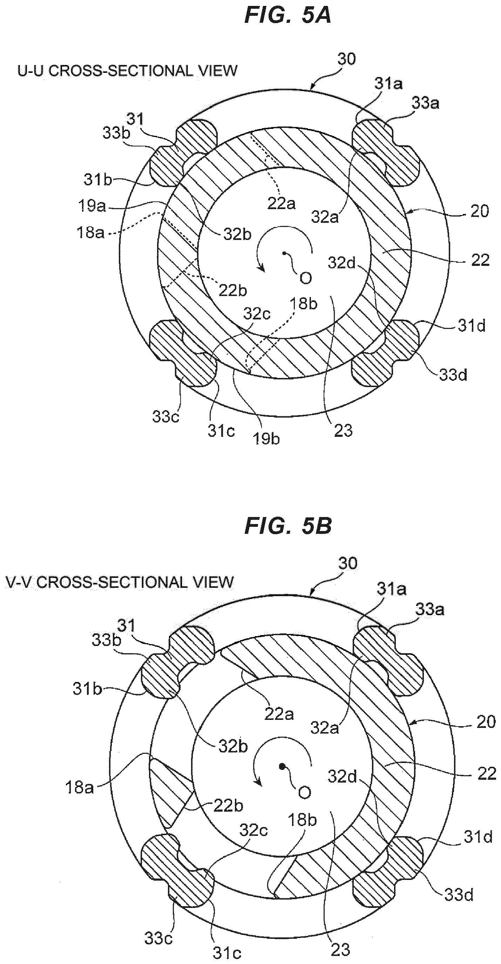

In the flow channel switching valve 1 according to the present embodiment, the respective communication ports 22a and 22b are provided with bridging portions 19a and 19b which extend in a peripheral direction (a rotating direction) so as to be along the outer periphery of the cylindrical valve element portion 22. As a result, in the case that the bridging portions 19a and 19b are comparatively hard, it is possible to prevent the inside ribs 32a to 32d of the seal member 30 from getting (falling away) into the respective communication ports 22a and 22b, as shown in Fig. 5A. On the other hand, in the case that the bridging portions 19a and 19b are comparatively soft, the bridging portions 19a and 19b bend and the inside ribs 32a to 32d of the seal member 30 may get into the respective communication ports 22a and 22b. However, even in this case, the inside ribs 32a to 32d are guided to the bridging portions 19a and 19b and can assist the inside ribs 32a to 32d running on the respective communication ports 22a and 22b, and it is possible to effectively reduce the torque required for switching the flow channel.

Further, at positions where the bridging portions 19a and 19b do not exist in the respective communication ports 22a and 22b (positions above and below the bridging portions 19a and 19b), it is thought that the inside ribs 32a to 32d of the seal member 30 get slightly into the communication ports 22a and 22b due to its elasticity. However, in the flow channel switching valve 1 according to the present embodiment, the peripheries in the outer peripheral sides of the communication ports 22a and 22b are formed to be rounded. As a result, since it is possible to assist the inside ribs 32a to 32d of the seal member 30 running on the respective communication ports 22a and 22b by the rounded corners 18a and 18b as shown in Fig. 5B, it is also possible to effectively reduce the torque required for switching the flow channel.

In the embodiment mentioned above, the bridging portions 19a and 19b have a curved shape which connects both end portions in the peripheral direction of the respective communication ports 22a and 22b, however, the bridging portions 19a and 19b my have a linear shape which connects both end portions in the peripheral direction of the respective ports 22a and 22b. Further, the bridging portions 19a and 19b are provided respectively only one in the center of the respective communication ports 22a and 22b (particularly in the respective cover side communication ports 27a and 27b) as well as having the same thickness (a thickness in a diametrical direction) as the cylindrical valve element portion 22. However, it goes without saying that the position, the number and the cross-sectional shape of the bridging portions provided in the communication ports 22a and 22b may be appropriately designed.

### Second Embodiment

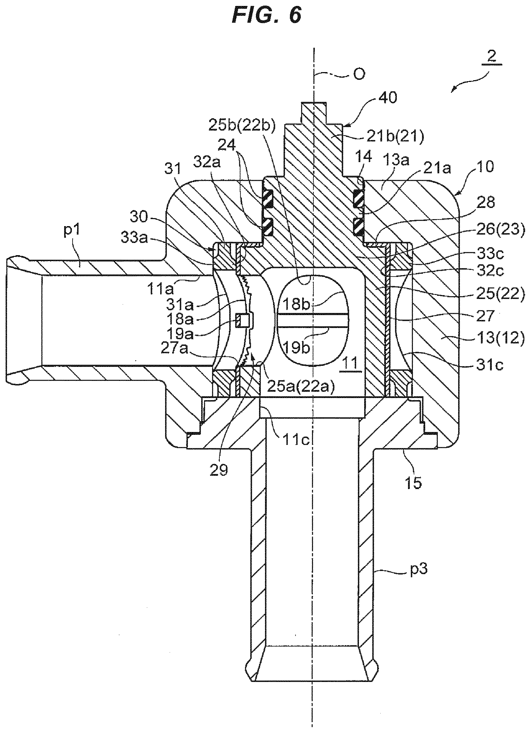

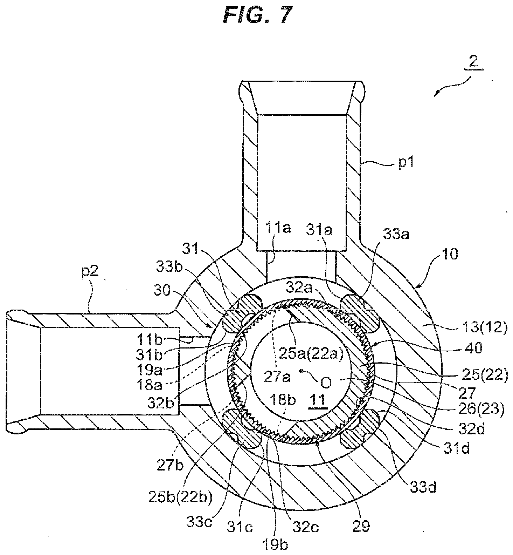

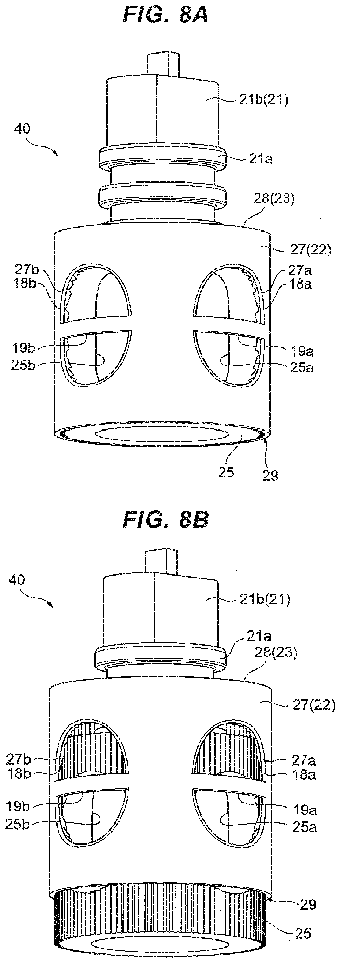

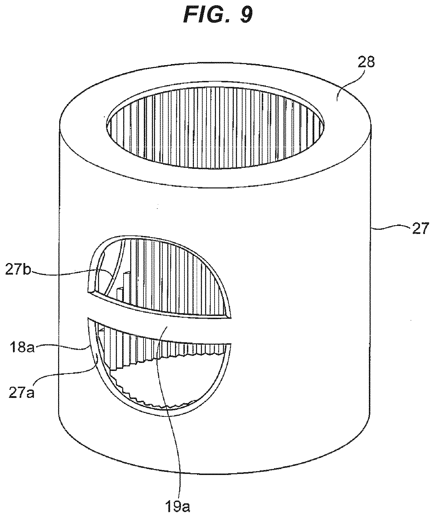

Fig. 6 is a vertical cross-sectional view showing a main structure of a second embodiment of the flow channel switching valve according to the present invention and is a view along the arrow A-A in Fig. 1B, and Fig. 7 is a transverse cross-sectional view showing the main structure of the second embodiment of the flow channel switching valve according to the present invention and is a view along the arrow B-B in Fig. 1B. Further, Figs. 8A and 8B are perspective views showing a valve element in Fig. 6, in which Fig. 8A is a view showing an assembly completed state and Fig. 8B is a view showing an assembly midstream state, and Fig. 9 is a perspective view showing a cylindrical cover portion in Fig. 8.

A flow channel switching valve 2 according to the present embodiment is different from the flow channel switching valve 1 according to the first embodiment mentioned above in a point that a cylindrical valve element portion of a valve element is constructed by two members including a cylindrical main body portion and a cylindrical cover portion, and is formed by putting the cylindrical cover portion on the cylindrical main body portion, and is the same as the flow channel switching valve 1 according to the first embodiment in the other structures. Therefore, the same reference numerals are attached to the same structures as those of the first embodiment, and a detailed description thereof will be omitted.

Describing in detail, in the flow channel switching valve 2 according to the present embodiment, the seat member 23a for slipping between the ceiling portion of the cylindrical valve element portion 23 and the ceiling portion 13a of the cylindrical barrel portion 13 is removed, the cylindrical valve element portion 22 in the valve element 40 is constructed by a cylindrical main body portion 25 with a ceiling portion which is made of a raw material having a comparatively high mechanical strength such as polyphenylene sulfide (PPS) resin, and a cylindrical cover portion 27 which covers an outer side of the cylindrical body portion 25 (a portion around the valve shaft 21 in an outer periphery of the cylindrical main body portion 25 and an upper surface of the ceiling portion of cylindrical main body portion 26), is made of a raw material having a lower sliding resistance against the seal member 30 and the valve body 10 than the cylindrical main body portion 25 such as PTFE (also called as Teflon (trademark)) or a polyacetal (POM) resin, and main body side communication ports 25a and 25b and cover side communication ports 27a and 27b are formed respectively in the cylindrical main body portion 25 and the cylindrical cover portion 27. The main body side communication ports 25a and 25b and the cover side communication ports 27a and 27b construct the communication ports 22a and 22b and have the same shape. Further, an engagement mechanism 29 is provided between the outer periphery of the cylindrical main body portion 25 and the inner periphery of the cylindrical cover portion 27, the engagement mechanism being constructed by a serration fitting structure integrally engaging the cylindrical main body portion 25 and the cylindrical cover portion 27. As a result, rotational positions of the cylindrical main body portion 25 and the cylindrical cover portion 27 are defined, and the cylindrical main body portion 25 and the cylindrical cover portion 27 are integrally rotated.

Further, the valve shaft 21 is provided so as to protrude upward from the center of the ceiling portion 26 of the cylindrical main body portion, bridging portions 19a and 19b extending in a peripheral direction (a rotating direction) are integrally formed at the centers of the respective cover side communication ports 27a and 27b formed in the cylindrical cover portion 27 so as to be along an outer periphery of the cylindrical valve element portion 22 (that is, an outer periphery of the cylindrical cover portion 27), and peripheries in outer peripheral sides of the respective cover side communication ports 27a and 27b are formed to be rounded (rounded portions 18a and 18b).

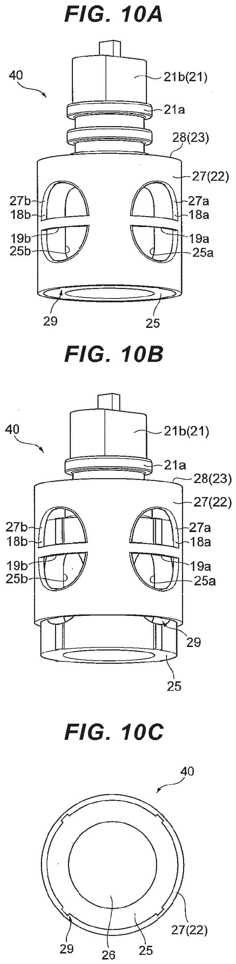

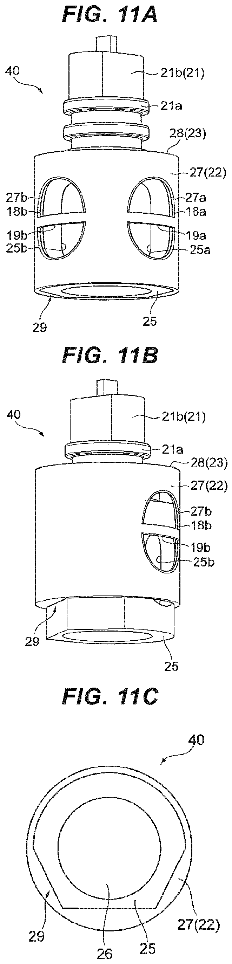

In the illustrated example, the engagement mechanism 29 integrally engaging the cylindrical main body portion 25 and the cylindrical cover portion 27 employs the serration fitting structure constructed by an external gear which is formed in the outer periphery of the cylindrical main body portion 25 and an internal gear which is formed in the inner periphery of the cylindrical cover portion 27. However, for example, as shown in Figs. 10 and 11, the cylindrical main body portion 25 and the cylindrical cover portion 27 may be engaged by concavities and convexities (refer to Fig. 10), chamfer portions or D-cut surfaces (refer to Fig. 11) formed between the outer periphery of the cylindrical main body 25 and the inner periphery of the cylindrical cover portion 27. Further, it goes without saying that the cylindrical main body portion 25 and the cylindrical cover portion 27 may be integrated by welding, adhesive bonding, caulking or fastening.

In the flow channel switching valve 2 having the valve element 40 according to the structure, the ceiling portion 28 of the cylindrical cover portion 27 in the cylindrical valve element portion 22 comes into contact with the ceiling portion 13a of the cylindrical barrel portion 13, the valve element 40 is arranged within the valve chamber 11 in a posture that (the outer peripheral side of) the cylindrical cover portion 27 of the cylindrical valve element portion 22 comes into contact with (the inner peripheral side of) the inside ribs 32a to 32b, and the four open and close modes mentioned above are selectively adopted by rotating the valve element 40 on the basis of the motor driving so as to switch the flow channel as mentioned above, in the same manner as the flow channel switching valve 1 according to the first embodiment. However, the inner peripheral side of (the inside ribs 30a to 30d of) the seal member 30 and the cylindrical cover portion 27 (the outer side in the cylindrical valve element portion 22 of the valve element 20) sliding along (the ceiling portion 13a of the cylindrical barrel portion 13 of) the valve body 10 when the flow channel is switched are formed by the raw material having the lower sliding resistance against the seal member 30 and the valve body 10 than the cylindrical main body portion 25 (the inner side in the cylindrical valve element portion 22 of the valve element 20). As a result, in addition to the effect of the first embodiment mentioned above, it is possible to further effectively reduce the toque required for switching the flow channel by making the sliding resistance against the seal member 30 and the valve body 10 smaller.

In the embodiment mentioned above, the bridging portions 19a and 19b are provided only in the cover side communication ports 27a and 27b in the outer side among the main body side communication ports 25a and 25b and the cover side communication ports 27a and 27b constructing the respective communication ports 22a and 22b, however, it goes without saying that the same bridging portions as the bridging portions 19a and 19b may be provided in the main body side communication ports 25a and 25b. In this case, even if (the bridging portions 19a and 19b of) the cylindrical cover portion 27 are soft, it is possible to securely prevent the inside ribs 32a to 32d of the seal member 30 from getting into the respective communication ports 22a and 22b.

Further, the embodiment mentioned above employs the aspect that the cylindrical valve element 22 of the valve element 40 is formed by two members including the cylindrical main body portion 25 and the cylindrical cover portion 27. However, it goes without saying that the cylindrical main body portion 25 and the cylindrical cover portion 27 may be integrally formed, for example, a two-color molding (a double injection molding), and the outer side in the cylindrical valve element portion 22 of the valve element 40 may be formed by the raw material having the lower sliding resistance against the seal member 30 than that in the inner side thereof.

Further, in the embodiment mentioned above, the valve element 40 is made of the resin, however, may be of course made of, for example, a metal. Further, in the embodiment mentioned above, the cylindrical main body portion 25 and the cylindrical cover portion 27 constructing the valve element 40 are made of the different raw materials. However, for example, the cylindrical main body portion 25 and the cylindrical cover portion 27 may be made of the same raw material, and a surface treatment for reducing the sliding resistance against (the inside ribs 32a to 32d of) the seal member 30 and (the ceiling portion 13a of the cylindrical barrel portion 13 of) the valve body 10 may be applied to an outer peripheral surface or an upper surface of the cylindrical cover portion 27.

## Claims

1. A flow channel switching valve (1) comprising:
a valve body (10) in which a valve chamber (11) is formed in its inner portion and which has a cylindrical barrel portion (13) provided with a plurality of outflow ports (11a, 11b) in its outer peripheral portion;
a valve element (20) in which a plurality of communication ports (22a, 22b) are formed in a peripheral direction and which has a cylindrical valve element portion (22) with an upper opening that is occluded and rotatably arranged within said valve chamber (11),
a rotation drive unit for rotating said valve element (20);
a seal member (30) which is interposed between the cylindrical barrel portion (13) of said valve body (10) and the cylindrical valve element portion (22) of said valve element (20) so as to suppress leakage of a fluid between said valve chamber (11) and each of the outflow ports (11a, 11b); and
the flow channel switching valve (1) being structured such that said cylindrical valve element portion (22) rotationally slides around an inner peripheral side of said seal member (30) so as to open and close or switch said outflow port (11a, 11b) of said valve body (10), by rotating said cylindrical valve element portion (22) of said valve element (20) within said valve chamber (11) by said rotation drive unit, wherein a bridging portion (19a, 19b) connecting two end portions in the peripheral direction of said communication port (22a, 22b) is provided in each of the communication ports (22a, 22b) in said cylindrical valve element portion (22) of said valve element (20), said bridging portion (19a, 19b) having a thickness that is the same as a thickness of the cylindrical valve element portion (22)
the seal member (30) comprises a plurality of openings (31a, 31b, 31c, 31d) for communicating with the communication ports (22a, 22b) and
the seal member (30) surrounds the cylindrical valve element portion (22).

2. The flow channel switching valve (1) according to claim 1, **characterized in that** an outer side in said cylindrical valve element portion (22) of said valve element (20) is formed by a raw material having a lower sliding resistance against said seal member (30) in comparison with an inner side.

3. A flow channel switching valve (2) comprising:
a valve body (10) in which a valve chamber (11) is formed in its inner portion and which has a cylindrical barrel portion (13) including a plurality of outflow ports (11a, 11b) in its outer peripheral portion;
a valve element (40) in which a plurality of communication ports (25a, 25b, 27a, 27b) are formed in a peripheral direction and which has a cylindrical valve element portion (22) with an upper opening that is occluded and rotatably arranged within said valve chamber (11);
a rotation drive unit for rotating said valve element (40);
a seal member (30) which is interposed between the cylindrical barrel portion (13) of said valve body (10) and the cylindrical valve element portion (22) of said valve element (40) so as to suppress leakage of a fluid between said valve chamber (11) and each of the outflow ports (11a, 11b); and
the flow channel switching valve (2) being structured such that said cylindrical valve element portion (22) rotationally slides around an inner peripheral side of said seal member (30) so as to open and close or switch said outflow port of said valve body (10), by rotating said cylindrical valve element portion (22) of said valve element (40) within said valve chamber (11) by said rotation drive unit, wherein said cylindrical valve element portion (22) is formed by an outer side of a cylindrical main body portion (25) being coated with a cylindrical cover portion (27) made of a raw material having a lower sliding resistance against said seal member (30) in comparison with said cylindrical main body portion (25),
a bridging portion (19a, 19b) connecting two end portions in a peripheral direction of said communication port (27a, 27b) is provided in each of the communication ports (27a, 27b) in said cylindrical cover portion (27),
the seal member (30) comprises a plurality of openings (31a, 31b, 31c, 31d) for communicating with the communication ports (27a, 27b) and
the seal member (30) surrounds the cylindrical valve element portion (22).

4. The flow channel switching valve (2) according to claim 3, **characterized in that** an engagement mechanism integrally engaging said cylindrical main body portion (25) with said cylindrical cover portion (27) is provided between an outer periphery of said cylindrical main body portion (25) and an inner periphery of said cylindrical cover portion (27).

5. The flow channel switching valve (2) according to claim 3 or 4, **characterized in that** a main body bridging portion connecting two end portions in the peripheral direction of said communication port (25a, 25b) is provided in each of the communication ports (25a, 25b) in said cylindrical main body portion (25) of said cylindrical valve element portion (22) at a position corresponding to said bridging portion (19a, 19b).

6. The flow channel switching valve (1, 2) according to any one of claims 1 to 5, **characterized in that** said bridging portion (19a, 19b) is provided along an outer periphery of said cylindrical valve element portion (22) or said cylindrical cover portion (27).

7. The flow channel switching valve (1, 2) according to any one of claims 1 to 6, **characterized in that** said bridging portion (19a, 19b) is provided at the upper and lower center portion of each of the communication ports (22a, 22b, 25a, 25b, 27a, 27b).

8. The flow channel switching valve (1, 2) according to any one of claims 1 to 7, **characterized in that** a periphery of an outer peripheral side of each of the communication ports (22a, 22b, 27a, 27b) is formed to be rounded.

## Patentansprüche

1. Ein Strömungskanalumschaltventil (1), das aufweist:
einen Ventilkörper (10), in dem eine Ventilkammer (11) in seinem inneren Bereich ausgeformt ist, und der einen zylindrischen Tonnen-Bereich (13) aufweist, der mit einer Mehrzahl von Ausflussöffnungen (11a, 11b) in seinem Umfangsbereich versehen ist;
ein Ventilelement (20), in dem eine Mehrzahl von Verbindungsöffnungen (22a, 22b) in einer Umfangsrichtung ausgeformt sind, und das einen zylindrischen Ventilelement-Bereich (22) mit einer oberen Öffnung hat, die verdeckt ist und drehbar in der Ventilkammer (11) angeordnet ist,
eine Rotationsantriebseinheit zum Rotieren des Ventilelements (20);
ein Abdichtungsbauteil (30), das zwischen dem zylindrischen Tonnen-Bereich (13) des Ventilkörpers (10) und dem zylindrischen Ventilelement-Bereich (22) des Ventilelements (20) eingefügt ist, um das Auslaufen eines Fluids zwischen der Ventilkammer (11) und jedem der Ausflussöffnungen (11a, 11b) zu unterdrücken; und
wobei das Strömungskanalumschaltventil (1) so aufgebaut ist, dass der zylindrische Ventilelement-Bereich (22) rotierend um eine innere periphere Seite des Abdichtungsbauteils (30) herumgleitet, um die Ausflussöffnung (11a, 11b) des Ventilkörpers (10) zu öffnen und zu schließen oder umzuschalten, in dem die Rotationsantriebseinheit den zylindrischen Ventilelement-Bereich (22) des Ventilelements (20) in der Ventilkammer (11) rotiert,
wobei ein Verbindungsbereich (19a, 19b), der zwei Endbereiche in der Umfangsrichtung der Verbindungsöffnung (22a, 22b) verbindet, in jeder der Verbindungsöffnungen (22a, 22b) in dem zylindrischen Ventilelement-Bereich (22) des Ventilelements (20) vorgesehen ist, und wobei der Verbindungsbereich (19a, 19b) die gleiche Dicke wie der zylindrischen Ventilelement-Bereich (22) aufweist,
wobei das Abdichtungsbauteil (30) eine Mehrzahl von Öffnungen (31a, 31b, 31c, 31d) zum Kommunizieren mit den Verbindungsöffnungen (22a, 22b) aufweist und wobei
das Abdichtungsbauteil (30) den zylindrischen Ventilelement-Bereich (22) umgibt.

2. Das Strömungskanalumschaltventil (1) gemäß Anspruch 1, gekennzeichnet darin, dass eine Außenseite in dem zylindrischen Ventilelement-Bereich (22) des Ventilelements (20) durch ein Rohmaterial gebildet wird, das im Vergleich zu einer Innenseite einen geringeren Gleitwiderstand gegenüber dem Abdichtungsbauteil (30) aufweist.

3. Ein Strömungskanalumschaltventil (2), das aufweist:
einen Ventilkörper (10), in dem eine Ventilkammer (11) in seinem inneren Bereich ausgeformt ist und der einen zylindrischen Tonnen-Bereich (13) aufweist, der eine Mehrzahl von Ausflussöffnungen (11a, 11b) in seinem äußeren Umfangsbereich umfasst;
ein Ventilelement (40), in dem eine Mehrzahl von Verbindungsöffnungen (25a, 25b, 27a, 27b) in einer Umfangsrichtung ausgeformt sind und das einen zylindrischen Ventilelement-Bereich (22) mit einer oberen Öffnung aufweist, die verdeckt ist und die drehbar in der Ventilkammer (11) angeordnet ist;
eine Rotationsantriebseinheit zum Rotieren des Ventilelements (40);
ein Abdichtungsbauteil (30), das zwischen dem zylindrischen Tonnen-Bereich (13) des Ventilkörpers (10) und dem zylindrischen Ventilelement-Bereich (22) des Ventilelements (40) eingefügt ist, um das Auslaufen eines Fluids zwischen der Ventilkammer (11) und jeder der Ausflussöffnungen (11a, 11b) zu unterdrücken; und
wobei das Strömungskanalumschaltventil (2) so aufgebaut ist, dass der zylindrische Ventilelement-Bereich (22) rotierend um eine innere periphere Seite des Abdichtungsbauteils (30) herumgleitet, um die Ausflussöffnung des Ventilkörpers (10) zu öffnen und zu schließen oder umzuschalten, in dem die Rotationsantriebseinheit den zylindrischen Ventilelement-Bereich (22) des Ventilelements (40) in der Ventilkammer (11) rotiert, wobei
der zylindrische Ventilelement-Bereich (22) durch eine Außenseite eines zylindrischen Grundkörper-Bereichs (25) ausgeformt ist, die mit einem zylindrischen Abdeckungsbereich (27) ummantelt ist, der aus einem Rohmaterial hergestellt ist, das im Vergleich zu dem zylindrischen Grundköper-Bereich (25) einen geringeren Gleitwiderstand gegenüber dem Abdichtungsbauteil (30) aufweist,
wobei ein Verbindungsbereich (19a, 19b), der zwei Endbereiche in einer Umfangsrichtung des Verbindungsbereichs (27a, 27b) verbindet, in jeder der Verbindungsöffnungen (27a, 27b) in dem zylindrischen Abdeckungsbereich (27) vorgesehen ist, wobei
das Abdichtungsbauteil (30) eine Vielzahl von Öffnungen (31a, 31b, 31c, 31d) zum Kommunizieren mit den Verbindungsöffnungen (27a, 27b) aufweist, und wobei das Abdichtungsbauteil (30) den zylindrischen Ventilelement-Bereich (22) umgibt.

4. Das Strömungskanalumschaltventil (2) nach Anspruch 3, **gekennzeichnet dadurch, dass** ein Eingriffsmechanismus, der den zylindrischen Grundköper-Bereich (25) integral mit dem zylindrischen Abdeckungsbereich (27) zum Eingriff bringt, zwischen einem äußeren Umfang des zylindrischen Grundkörperbereichs (25) und einem inneren Umfang des zylindrischen Abdeckungsbereichs (27) vorgesehen ist.

5. Das Strömungskanalumschaltventil (2) nach Anspruch 3 oder 4, **gekennzeichnet dadurch, dass** ein Grundköper-Verbindungsbereich, der zwei Endbereiche in der Umfangsrichtung der Verbindungsöffnung (25a, 25b) verbindet, in jeder der Verbindungsöffnungen (25a, 25b) in dem zylindrischen Grundkörperbereich (25) des zylindrischen Ventilelement-Bereichs (22) an einer Position vorgesehen ist, die zu dem Verbindungsbereich (19a, 19b) korrespondiert.

6. Das Strömungskanalumschaltventil (1, 2) gemäß einem der Ansprüche 1 bis 5, **gekennzeichnet dadurch, dass** der Verbindungsbereich (19a, 19b) entlang einem äußeren Umfang des zylindrischen Ventilelement-Bereichs (22) oder des zylindrischen Abdeckungsbereichs (27) vorgesehen ist.

7. Das Strömungskanalumschaltventil (1, 2) gemäß einem der Ansprüche 1 bis 6, **gekennzeichnet dadurch, dass** der Verbindungsbereich (19a, 19b) an dem oberen und unteren zentralen Bereich jeder der Verbindungsöffnungen (22a, 22b, 25a, 25b, 27a, 27b) vorgesehen ist.

8. Das Strömungskanalumschaltventil (1, 2) gemäß einem der Ansprüche 1 bis 7, **gekennzeichnet dadurch, dass** ein Umfang einer äußeren Umfangsseite bei jeder der Verbindungsöffnungen (22a, 22b, 25a, 25b, 27a, 27b) abgerundet ausgeformt ist.

## Revendications

1. Une soupape de commutation de canal d'écoulement (1), comprenant :
un corps de valve (10) dans lequel une chambre de valve (11) est formée dans sa portion intérieure et qui comprend une partie de tonneau cylindrique (13) qui est équipée d'une pluralité d'ouvertures de sortie (11a, 11b) dans sa partie périphérique extérieure;
un élément de valve (20) dans lequel une pluralité d'orifices de communication (22a, 22b) est formée dans une direction périphérique et qui comprend une partie cylindrique d'élément de valve (22) avec une ouverture supérieure qui est cachée et qui est arrangée de manière rotative dans la chambre de valve (11);
une unité d'entraînement en rotation pour tourner l'élément de valve (20);
un élément d'étanchéité (30) qui est interposé entre la partie de tonneau cylindrique (13) du corps de valve (10) et la partie cylindrique d'élément de valve (22) de l'élément de valve (20) afin de supprimer la fuite d'un fluide entre la chambre de valve (11) et chacune des ouvertures de sortie (11a, 11b) et
la soupape de commutation de canal d'écoulement (1) étant structurée de sorte que la partie cylindrique d'élément de valve (22) glisse autour d'un côté périphérique intérieur de l'élément d'étanchéité (30) de manière rotative afin d'ouvrir et fermer ou de commuter l'ouverture de sortie (11a, 11b) du corps de valve (10) en tournant la partie cylindrique d'élément de valve (22) de l'élément de valve (20) dedans la chambre de valve (11) par l'unité d'entraînement en rotation,
dans laquelle une partie de connexion (19a, 19b) qui joint deux parties terminales dans la direction périphérique de l'ouverture de communication (22a, 22b) est pourvue dans chacune des ouvertures de communication (22a, 22b) dans la partie cylindrique d'élément de valve (22) de l'élément de valve (20), la partie de connexion (19a, 19b) ayant une épaisseur qui est la même qu'une épaisseur de la partie cylindrique d'élément de valve (22),
dans laquelle l'élément d'étanchéité (30) entoure la partie cylindrique d'élément de valve (22).

2. Le soupape de commutation de canal d'écoulement (1) selon revendication 1, **caractérisé en ce qu'**un côté extérieur de la partie cylindrique d'élément de valve (22) de l'élément de valve est formé par une matière première qui a une résistance au glissement contre l'élément d'étanchéité (30) qui est inférieure par comparaison à un côté intérieur.

3. Une soupape de commutation de canal d'écoulement (2) comprenant :
un corps de valve (10) dans lequel une chambre de valve (11) est formée dans sa partie intérieure et qui comprend une partie de tonneau cylindrique (13) qui est équipée d'une pluralité d'ouvertures de sortie (11a, 11b) dans sa partie extérieure périphérique;
un élément de valve (40) dans lequel une pluralité d'ouvertures de communication (25a, 25b, 27a, 27b) est formée dans la direction périphérique et qui a une partie cylindrique d'élément de valve (22) avec une ouverture supérieure qui est cachée et qui est arrangée de manière rotative dans la chambre de valve (11);
une unité d'entraînement en rotation pour l'élément de valve (40);
un élément d'étanchéité qui est interposé entre la partie de tonneau cylindrique (13) du corps de valve (10) et la partie cylindrique d'élément de valve (22) de l'élément de valve (40) pour supprimer la fuite d'un fluide entre la chambre de valve (11) et chacune des ouvertures de sortie (11a, 11b) et
la soupape de commutation de canal d'écoulement (2) étant structurée de sorte que la partie cylindrique d'élément de valve (22) glisse autour d'un côté périphérique intérieur de l'élément d'étanchéité (30) de manière rotative afin d'ouvrir et fermer ou de commuter l'ouverture de sortie (11a, 11b) du corps de valve (10) en tournant la partie cylindrique d'élément de valve (22) de l'élément de valve (20) dedans la chambre de valve (11) par l'unité d'entraînement en rotation,
dans laquelle la partie cylindrique d'élément de valve (22) est formée par un côté extérieur d'une partie de corps principal cylindrique (25) qui est recouvert d'une partie de couvercle cylindrique (27), la partie de couvercle cylindrique (27) étant fabriquée d'une matière première qui a une résistance au glissement contre l'élément d'étanchéité qui est inférieure en comparaison avec la partie de corps principal cylindrique (25),
dans laquelle une partie de connexion (19a, 19b) qui joint deux parties terminales dans une direction périphérique de l'ouverture de communication (27a, 27b) est pourvue dans chacune des ouvertures de communication (27a, 27b) dans la partie de couvercle cylindrique (27),
l'élément d'étanchéité (30) comprenant une pluralité d'ouvertures (31a, 31b, 31c, 31d) pour communiquer avec les ouvertures de communication (27a, 27b) et l'élément d'étanchéité entourant la partie cylindrique d'élément de valve.

4. La soupape de commutation de canal d'écoulement (2) selon revendication 3, **caractérisée en ce qu'**un mécanisme d'engagement met en prise de manière intégrale la partie de corps principal cylindrique (25) avec la partie de couvercle cylindrique (27) et **en ce que** le mécanisme d'engagement est pourvu entre une périphérie extérieure de la partie de corps principal cylindrique (25) et la partie de couvercle cylindrique (27).

5. La soupape de commutation de canal d'écoulement (2) selon revendication 3 ou 4, **caractérisée en ce qu'**une partie de connexion de corps principale qui joint deux parties terminales dans la direction périphérique de l'ouverture de communication (25a, 25b) est pourvue dans chacune des ouvertures de communication (25a, 25b) dans la partie cylindrique d'élément de valve (22) à une position qui correspond à la partie de connexion (19a, 19b).

6. La soupape de commutation de canal d'écoulement (1, 2) selon une des revendications 1 à 5, **caractérisée en ce que** la partie de connexion (19a, 19b) est disposée le long d'une périphérie extérieure de la partie cylindrique d'élément de valve (22) de la partie de couvercle cylindrique (27).

7. La soupape de commutation de canal d'écoulement (1, 2) selon quelconque des revendications 1 à 6, **caractérisée en ce que** la partie de connexion (19a, 19b) est pourvue dans une partie supérieure et une partie inférieure de chacune des ouvertures de communication (22a, 22b, 25a, 25b, 27a, 27b).

8. La soupape de commutation de canal d'écoulement (1, 2) selon quelconque des revendications 1 à 7, **caractérisée en ce que** une périphérie d'un côté périphérique extérieur de chacune des ouvertures de communication (22a, 22b, 25a, 25b, 27a, 27b) est formée de manière arrondie.
